# EUROPEAN PATENT APPLICATION

(11) **EP 3 029 919 A1**
(43) Date of publication of application: **08.06.2016**
(21) Application number: 14831848.8
(22) Date of filing: 24.07.2014
(51) Int. Cl.: H04M 11/08, G06F 13/00, G06Q 30/02, G06Q 50/10

(54) **SERVER, COMMUNICATION SYSTEM, AND INFORMATION TRANSMISSION METHOD**

(30) Priority: 01.08.2013 JP 2013160176
(71) Applicant: NEC Corporation, Tokyo 108-8001 (JP)
(72) Inventor: KATO, Tetsuya, Tokyo 108-8001 (JP)
(74) Representative: MacDougall, Alan John Shaw
(86) International application number: PCT/JP2014/003907
(87) International publication number: WO 2015/015774

(57) **Abstract**

In order to solve a problem that an advertiser cannot know whether an advertisement was actually watched and listened to by a user of a terminal, a communication system of the present invention includes a server and a terminal. The server is a server which sends predetermined first information to the terminal, and which, when sending the first information, sends also second information which prompts the input of a matter related to the first information, and which outputs a first predetermined signal if a response to the second information, that is sent by the terminal, corresponds to a predetermined response. The terminal is a terminal which displays the received first information and the received second information on a screen of the terminal, and then outputs the inputted data as the response to the second information.

## Description

### [Technical Field]

The present invention relates to a server, a communication system and an information sending method, and particularly relates to a server, a communication system and an information sending method which sends an advertisement to a terminal and discounts a communication charge of the user of the terminal in return for making the terminal display the advertisement.

### [Background Art]

A communication system, which sends an advertisement to a terminal and discounts a communication charge of the user of the terminal in return for making the terminal display the advertisement, which is sent to the terminal, displayed on the terminal, is known in general. The above-mentioned communication system is disclosed in Patent Literature 1 and Patent Literature 2 below.

A communication system described in PTL(Patent Literature) 1 includes an advertisement information management center and a mobile terminal. The advertisement information management center sends advertisement information to the mobile terminal according to a predetermined condition. The mobile terminal stores the advertisement information, which is sent by the advertisement information management center, in an advertisement information database. The mobile terminal periodically reads the advertisement information, which is stored in the advertisement information database, and displays the read advertisement information on a screen of the mobile terminal. When the display is completed, the mobile terminal updates number of displays which the mobile terminal holds. The mobile terminal periodically sends the stored number of displays to the advertisement information management center. The advertisement information management center stores the number of displays, which is sent by each mobile terminal, in an individual user's display number management database which the advertisement information management center has. The advertisement information management center periodically collects the number of displays of each mobile terminal which is stored in the individual user's display number management database, and discounts an utilization charge of the mobile terminal on the basis of the number of displays, and cashes back a charge for displaying the advertisement, which an advertiser pays, to a user of the mobile terminal.

According to the above-mentioned configuration and the operation, it is possible for the communication system of PTL 1 to discount the communication charge of the user of the mobile terminal, and acquires the number of displays of the advertisement in each mobile terminal. The advertiser can numerically confirm an effect of the advertisement by checking the acquired number of displays.

A system described in PTL 2 includes a cellular phone and a server. When a user of the cellular phone watches and listens to an advertisement which is displayed on the cellular phone, the user sends watching and listening result information through the cellular phone to the server. When the server receives the watching and listening result information from the cellular phone, the server discounts a communication charge of the user of the cellular phone. The server requests an advertiser to pay a burden charge which corresponds to the discounted communication charge. The advertiser can confirm the effect of the advertisement by checking an amount of the burden charge.

### [Citation List]

### [Patent Literature]

[PTL 1] Japanese Patent Application Laid-Open Publication No. 2004-80552
[PTL 2] Japanese Patent Application Laid-Open Publication No. 2002-232604

### [Summary of Invention]

### [Technical Problem]

However, according to the communication system described in PTL 1, only the number of displays, that is, only the number of displays of the advertisement, which are periodically displayed on the screen of the terminal, is acquired. Consequently, the communication system has a problem that the advertiser cannot know whether the user of the mobile terminal actually watched and listened to the advertisement. As a result, the advertiser cannot thoroughly confirm the effect of the advertisement.

Also the system described in PTL 2 has the problem that the advertiser cannot know whether the user of the mobile terminal actually watched and listened to the advertisement. The reason is that, when receiving some watching and listening result information from the cellular phone, the system described in PTL 2 discounts the communication charge. Even when receiving absurd watching and listening result information or the like from the user of the cellular phone who does not watch and listen to the advertisement, the system described in PTL 2 discounts the communication charge, and requests the advertiser to pay the burden charge which corresponds to the discounted communication charge. Furthermore, even if seeing the requested amount of the burden charge, the advertiser cannot know whether the user of the mobile terminal actually watched and listened to the advertisement.

An object of the present invention is to provide a server, a communication system and an information sending method which solve the above-mentioned problem.

### [Solution to Problem]

In order to achieve the above-mentioned object, a server of the present invention is a server which sends predetermined first information to a terminal. When sending the first information, the server sends also second information which prompts the input of a matter related to the first information, and outputs a first predetermined signal if a response to the second information, which is sent by the terminal, corresponds to a predetermined response.

In order to achieve the above-mentioned object, a communication system of the present invention is a communication system which includes a server and a terminal. The server is a server which sends predetermined first information to a terminal, and which, when sending the first information, sends also second information to prompt the input of a matter related to the first information, and which outputs a first predetermined signal if a response to the second information, that is sent by the terminal, corresponds to a predetermined response. The terminal is a terminal which displays the received first information and the received second information on a screen of the terminal, and outputs data, that is inputted afterward, as the response to the second information.

In order to achieve the above-mentioned object, an information sending method of the present invention is a method for sending predetermined first information to a terminal. The information sending method includes: sending also second information, which prompts the input of a matter related to the first information, when sending the first information to the terminal; and outputting a first predetermined signal if a response to the second information, which is sent by the terminal, corresponds to a predetermined response.

### [Advantageous Effects of Invention]

According to the present invention, the communication system can inform the advertiser that the user of the terminal actually watched and listened to the advertisement. Since the advertiser can know that the user of the terminal actually watched and listened to the advertisement, the advertiser can thoroughly confirm the effect of the advertisement.

### [Brief Description of Drawings]

[Fig. 1] is a diagram showing an example of a configuration of a communication system in a first exemplary embodiment of the present invention.
[Fig. 2] is a diagram for explaining an operation of the communication system in the first exemplary embodiment of the present invention.
[Fig. 3] is a diagram showing an example of an advertisement or the like which is displayed on a screen of a terminal 40 included in the communication system in the first exemplary embodiment of the present invention.
[Fig. 4] is a diagram exemplifying another connection configuration (No. 1) of the communication system in the first exemplary embodiment of the present invention.
[Fig. 5] is a diagram exemplifying another connection configuration (No. 2) of the communication system in the first exemplary embodiment of the present invention.
[Fig. 6] is a diagram showing an example of a configuration of a communication system in a second exemplary embodiment of the present invention.
[Fig. 7] is a diagram for explaining an operation of the communication system in the second exemplary embodiment of the present invention.
[Fig. 8] is a diagram showing an example of a configuration of a communication system in a third exemplary embodiment of the present invention.
[Fig. 9] is a diagram for explaining an operation of the communication system in the third exemplary embodiment of the present invention.
[Fig. 10] is a diagram showing an example of a configuration of a communication system in a fourth exemplary embodiment of the present invention.
[Fig. 11] is a diagram for explaining an operation of the communication system in the fourth exemplary embodiment of the present invention.
[Fig. 12] is a diagram showing an example of a configuration of a communication system in a fifth exemplary embodiment of the present invention.
[Fig. 13] is a diagram for explaining an operation of the communication system in the fifth exemplary embodiment of the present invention.
[Fig. 14] is a diagram showing an example of a configuration of a communication system in a sixth exemplary embodiment of the present invention.

### [Description of Embodiments]

Next, an exemplary embodiment of the present invention will be explained in detail with reference to drawings.

### [First exemplary embodiment]

### [Explanation on configuration]

Firstly, a configuration of a communication system in a first exemplary embodiment of the present invention will be explained in the following.

### (1) Configuration of the communication system in the first exemplary embodiment of the present invention

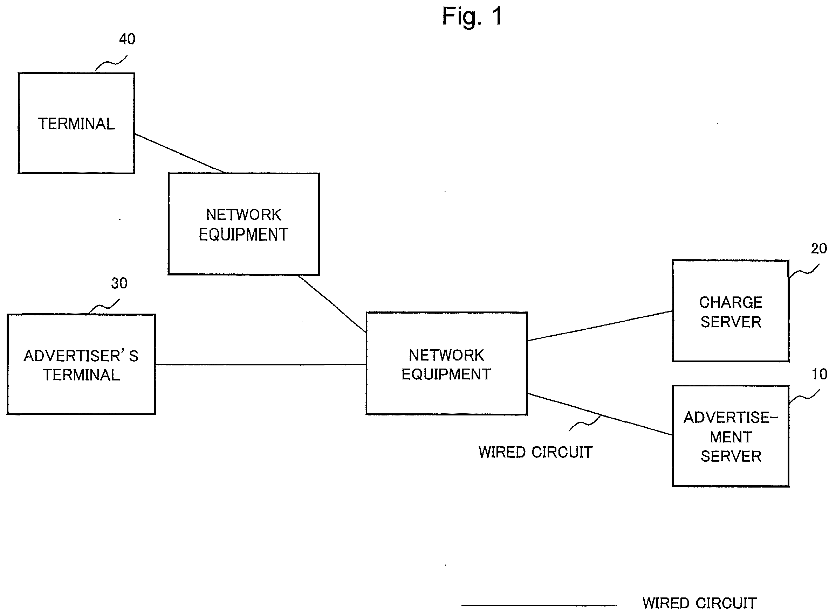

Fig. 1 is a diagram showing an example of the configuration of the communication system in the first exemplary embodiment of the present invention. As shown in Fig. 1, the communication system of the present exemplary embodiment includes an advertisement server 10, a charge server 20, an advertiser's terminal 30 and a terminal 40.

As shown in Fig. 1, the advertisement server 10, the charge server 20, the advertiser's terminal 30 and the terminal 40 are connected each other through network equipment and a wired circuit.

Each server and each terminal mentioned above are realized by a general server and a general terminal, respectively.

### (2) Outline of the communication system in the first exemplary embodiment of the present invention

Here, an outline of the communication system of the present exemplary embodiment will be explained in the following.

Firstly, the communication system of the present exemplary embodiment is a system which judges whether a user of the terminal watched and listened to an advertisement sent by the advertisement server 10 or not. In order to judge whether the user of the terminal watched and listened to the advertisement or not, the advertisement server 10 and the terminal 40, which the communication system of the present exemplary includes, carry out the following operations.
- When sending the advertisement to the terminal 40, the advertisement server 10 sends also an inquiry on contents of the advertisement.
- The terminal 40 displays the received advertisement and the received inquiry on the contents of the advertisement on a screen of the terminal 40. When the user of the terminal 40 inputs a reply to the inquiry, the terminal 40 sends the reply to the advertisement server 10.
- If the reply to the inquiry, which is sent by the terminal 40, is a correct reply, the advertisement server 10 judges that the user of the terminal 40 actually watched and listened to the advertisement.

When judging that the user of the terminal 40 actually watched and listened to the advertisement, through the advertiser's terminal 30 which an advertiser holds, the communication system of the present exemplary embodiment informs the advertiser that the user of the terminal actually watched and listened to the advertisement. A specific informing method will be explained in [Explanation on operation] described later.

Moreover, when judging that the user of the terminal actually watched and listened to the advertisement, the communication system of the present exemplary embodiment discounts a communication charge of the user of the terminal who watched and listened to the advertisement.

Specifically, when the advertisement server 10 judges that the user of the terminal 40 actually watched and listened to the advertisement, the advertisement server 10 sends a terminal identifier, which corresponds to the terminal 40, to the charge server 20. The charge server 20 is a charge server which manages the communication charge of the terminal connected with the advertisement server 10 by use of a general charge function. When the terminal identifier is inputted, the charge server 20 discounts the communication charge of the terminal 40, which the terminal identifier indicates, by a predetermined amount of money.

Next, an operation of the communication system in the first exemplary embodiment of the present invention will be explained in detail in the following.

### [Explanation on operation]

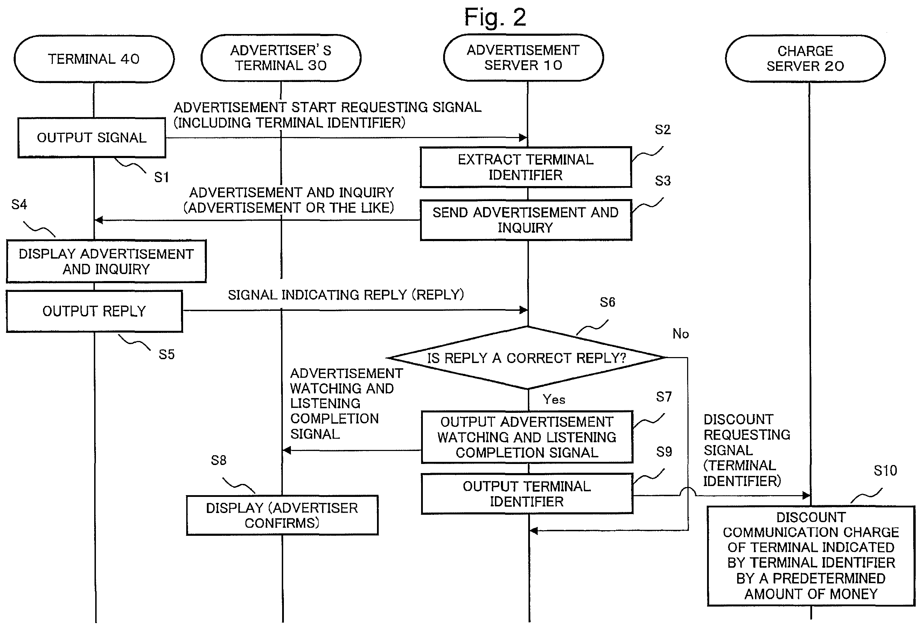

Fig. 2 is a diagram for explaining the operation of the communication system in the first exemplary embodiment of the present invention. With reference to Fig. 2, the operation of the communication system of the present exemplary embodiment will be explained in detail in the following.

### (1) Prior setting in the advertisement server 10

Firstly, the advertisement and the inquiry on the contents of the advertisement are set in the advertisement server 10 in advance by a manager of the communication system of the present exemplary embodiment. The advertisement is in a form of picture data or image data of a still picture, a moving picture or the like, and the inquiry on the contents of the advertisement is in a form of text data. It is desirable that the inquiry on the contents of the advertisement includes a reply method as shown in the following.

"Is a product displayed in the advertisement Smart phone? If Yes, please input a Number '1', and if No, please input a Number '2' (reply method)."

### (2) Operation of the communication system of the present exemplary embodiment

The operation of the communication system of the present exemplary embodiment will be explained in detail in the following.

### (2-1) Display of the advertisement and the inquiry

Firstly, when the user of the terminal 40 pushes a predetermined key, the terminal 40 sends a signal (hereinafter, referred to as 'advertisement start requesting signal'), which requests to send the advertisement, to the advertisement server 10 (S1).

At this time, the terminal 40 embeds the identifier (hereinafter, referred to as 'terminal identifier'), which indicates the terminal 40, in the advertisement start requesting signal, and sends the advertisement start requesting signal. The terminal identifier may be a telephone number of the terminal 40, or may be IMEI (International Mobile Equipment Identifier). The predetermined key mentioned above may be a button which is mounted on the terminal 40 in advance by a manufacturer of the terminal 40.

Next, when the advertisement start requesting signal is inputted from the terminal 40, the advertisement server 10 extracts the terminal identifier, which indicates the terminal 40, from the inputted advertisement start requesting signal, and stores the terminal identifier (S2).

Next, the advertisement server 10 sends the advertisement and the inquiry on the contents of the advertisement (hereinafter, referred to as 'advertisement or the like'), which are set in the advertisement server 10, to the terminal 40 (S3).

In the above-mentioned S3, the advertisement server 10 converts the advertisement or the like into an electric signal and sends the electric signal to the terminal 40.

Next, the terminal 40 extracts the advertisement or the like from the inputted electric signal, and displays the extracted advertisement or the like on the screen of the terminal 40 (S4).

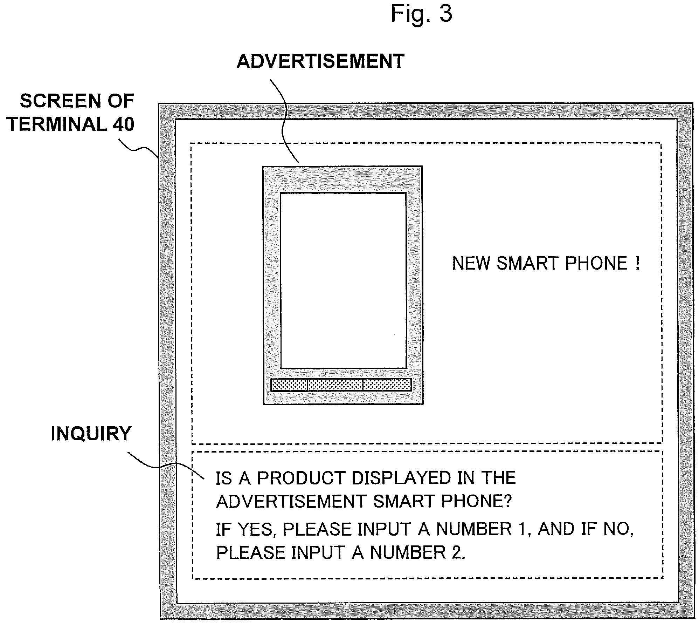

Fig. 3 is a diagram showing an example of the advertisement or the like which is displayed on the screen of the terminal 40. As shown in Fig. 3, the terminal 40 displays not only the advertisement but also the inquiry on the contents of the advertisement. As the inquiry on the contents of the advertisement, Fig. 3 exemplifies "Is a product displayed in the advertisement Smart phone? If Yes, please input a Number '1', and if No, please input a Number '2'."

### (2-2) Input by the user of the terminal

Next, while the following is not shown in the drawing, the user of the terminal 40 watches and listens to the advertisement and the inquiry which are displayed on the screen of the terminal 40, and inputs the reply to the inquiry into the terminal 40 through an input device of the terminal 40. For example, in the case of the inquiry shown in Fig. 3, the user of the terminal 40 may input the Number '1' into the terminal 40 through the input device as the reply to the inquiry.

### (2-3) Judgment whether the advertisement is watched and listened to, and Informing of the judgment to the advertiser

Next, the terminal 40 embeds the inputted reply (for example, Number '1') in a signal indicating reply, and outputs the signal indicating reply to the advertisement server 10 (S5).

Specifically, when the reply is inputted into the input device, the terminal 40 embeds data (hereinafter, referred to as 'reply data'), which the input device outputs, in the signal indicating reply, and outputs the signal indicating reply to the advertisement server 10.

Next, when the signal indicating reply is inputted from the terminal 40, the advertisement server 10 extracts the reply (reply data) from the signal indicating reply and judges whether the reply is a correct reply (S6).

Specifically, when the signal indicating reply is inputted, the advertisement server 10 extracts the reply data from the signal indicating reply, and judges whether the extracted reply data is the same as a predetermined data. The predetermined data mentioned above is set in the advertisement server 10 by the manager of the communication system of the present exemplary embodiment. The manager of the communication system of the present exemplary embodiment sets data, which the input device outputs in the case that the input device of the terminal 40 inputs the correct reply to the inquiry, in the advertisement server 10 in advance as the predetermined data.

Next, in the case that the reply data mentioned above is the same as the predetermined data (in the case of Yes in S6), the advertisement server 10 judges that the user of the terminal 40 watched and listened to the advertisement, and outputs a signal, which indicates that the user of the terminal watched and listened to the advertisement, to the advertiser's terminal 30 (S7).

At this time, the advertisement server 10 embeds the terminal identifier, which is extracted in the above-mentioned S2, in a signal (hereinafter, referred to as 'advertisement watching and listening completion signal') which indicates that the user of the terminal has watched and listened to the advertisement, and outputs the advertisement watching and listening completion signal.

Next, when the advertisement watching and listening completion signal is inputted from the advertisement server 10, the advertiser's terminal 30 extracts the terminal identifier from the advertisement watching and listening completion signal, and displays the terminal identifier on a screen of the advertiser's terminal 30 (S8).

The advertiser watches the screen of the advertiser's terminal 30, and consequently knows that the user of the terminal, which the terminal identifier indicates, actually watched and listened to the advertisement.

### (2-4) Discount of the communication charge

After outputting the advertisement watching and listening completion signal to the advertiser's terminal 30, the advertisement server 10 sends a signal (hereinafter, referred to as 'discount requesting signal'), which requests to discount the communication charge, to the charge server 20 (S9).

At this time, the advertisement server 10 embeds the terminal identifier, which is extracted in the above-mentioned S2, in the discount requesting signal, and outputs the discount requesting signal to the charge server 20.

Next, when the discount requesting signal is inputted, the charge server 20 extracts the terminal identifier from the discount requesting signal, and discounts the communication charge of the terminal 40, which the terminal identifier indicates, by a predetermined amount of money (S10).

The predetermined amount of money mentioned above is set in the charge server 20 by the manager of the communication system of the present exemplary embodiment.

### (2-5) Operation in the case of No in S6

In the above-mentioned S6, in the case that the reply data is different from the predetermined data (in the case of No in S6), since the advertisement server 10 does not know whether the user of the terminal watches and listens to the advertisement, the advertisement server 10 does not output the advertisement watching and listening completion signal or the discount requesting signal, and ends the operation.

### (3) Another connection configuration of the communication system of the present exemplary embodiment

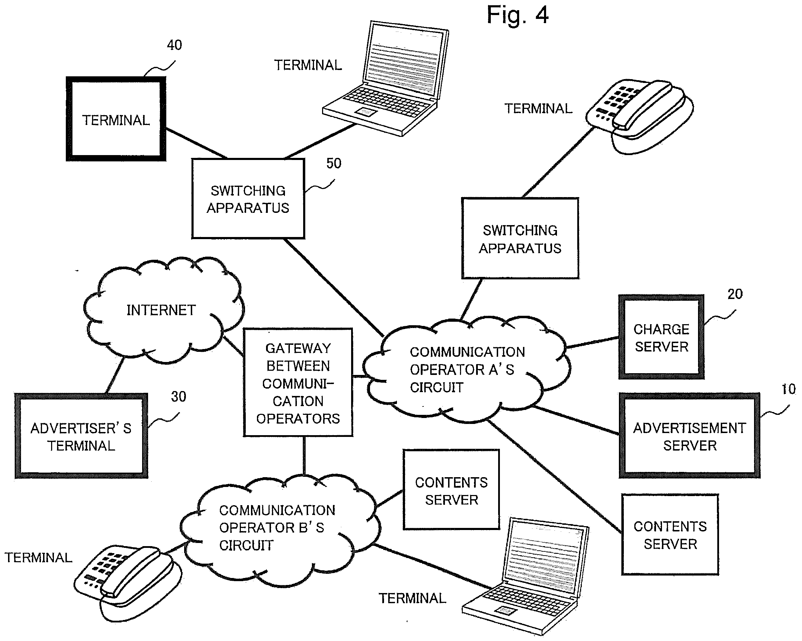

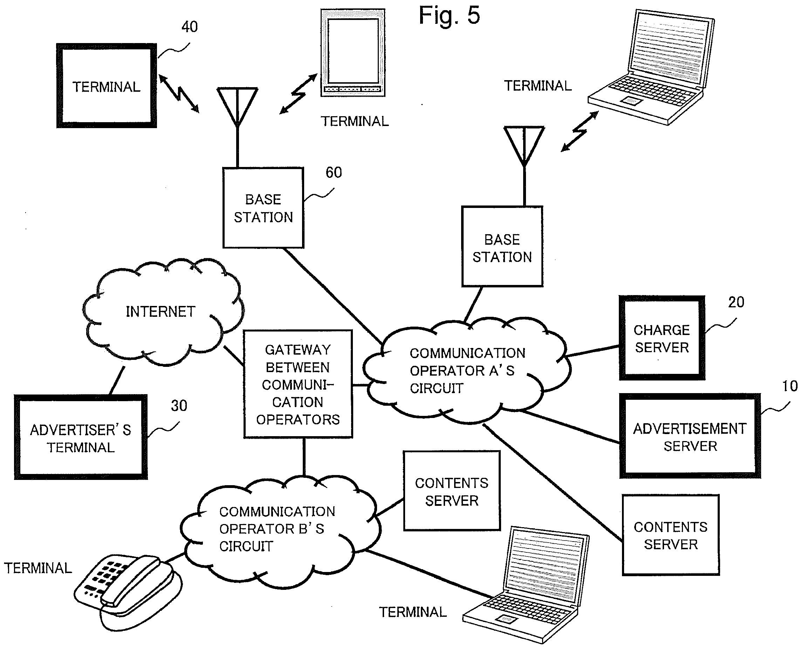

Fig. 4 is a diagram exemplifying another connection configuration (No. 1) of the communication system in the first exemplary embodiment of the present invention. Fig. 5 is a diagram exemplifying another connection configuration (No. 2) of the communication system in the first exemplary embodiment of the present invention.

As shown in Fig. 4, the advertisement server 10, the charge server 20, the advertiser's terminal 30 and the terminal 40 may be connected each other through a communication operator's circuit (dedicated line) and the Internet, and furthermore through network equipment such as a switching apparatus 50, a gateway and the like. As shown in Fig. 5, the terminal 40 and the advertisement server 10 may be connected each other through a base station 60. In this case, similarly to the general mobile terminal, the terminal 40 has a function to carry out wireless communication with the base station 60.

Moreover, while the case that number of the terminals is one (only terminal 40) has been described in the above mention, the number is not limited to one. A plurality of the terminals may be included in a mobile communication system. Each of the plural terminals carries out the same operation as the terminal 40 carries out, and the advertisement server 10 carries out S2 to S3, and S6 to S9, which are mentioned above, per the terminal.

Furthermore, while it has been described above that the advertisement is in the form of the picture data or the image data, the advertisement may be in a form of a text data or a voice data. Moreover, the advertisement may be data made of at least two kinds of data out of the picture data, the image data, the text data and the voice data.

### (4) Another example of the operation in S6, and another example of prior setting of the advertisement or the like

While the advertisement server 10 judges whether the reply data is the same as the predetermined data in the above-mentioned S6, the advertisement server 10 may alternatively judge whether the reply data includes the predetermined data.

Furthermore, the advertiser's terminal 30 may have a function which, when the advertisement or the like is set, outputs the advertisement or the like to the advertisement server 10 as an electric signal. In this case, the advertisement server 10 has a function which extracts the advertisement or the like from the inputted electric signal and stores the extracted advertisement or the like. The advertiser can set the advertisement or the like in the advertisement server 10 as shown in the following.

- The advertiser sets the advertisement or the like in the advertiser's terminal 30. When the advertisement or the like is set, the advertiser's terminal 30 outputs the set advertisement or the like to the advertisement server 10 as the electric signal. The advertisement server 10 extracts the advertisement or the like from the electric signal which is inputted from the advertiser's terminal 30, and stores the extracted advertisement or the like.

### [Explanation on effect]

According to the communication system of the present exemplary embodiment, it is possible to inform the advertiser that the user of the terminal actually watched and listened to the advertisement.

The reason is that the advertisement server of the present exemplary embodiment sends the inquiry on the contents of the advertisement to the terminal, and judges that the user of the terminal watched and listened to the advertisement if the reply to the inquiry, which is sent by the terminal, is the correct reply, and then outputs the predetermined signal to the terminal of the advertiser.

Since the advertiser can know that the user of the mobile terminal actually watched and listened to the advertisement, the advertiser can thoroughly confirm the effect of the advertisement.

### [Second exemplary embodiment]

Next, a second exemplary embodiment of the present invention will be explained. A communication system of the second exemplary embodiment is a system in which, when a terminal ends communication, an advertisement server sends an advertisement and an inquiry to the terminal. Since the communication system of the second exemplary embodiment is a modification of the communication system of the first exemplary embodiment, the communication system of the second exemplary embodiment has the same effect as the communication system of the first exemplary embodiment has.

### [Explanation on configuration]

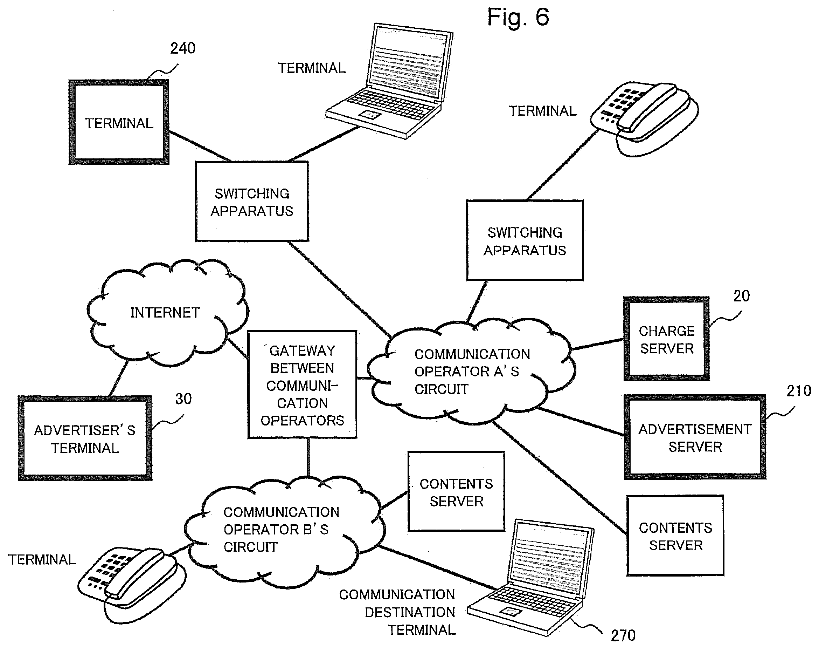

Fig. 6 is a diagram showing an example of a configuration of the communication system in the second exemplary embodiment of the present invention.

As shown in Fig. 6, the communication system of the present exemplary embodiment includes an advertisement server 210 and a terminal 240 in place of the advertisement server 10 and the terminal 40. Furthermore, as shown in Fig. 6, the communication system of the present exemplary embodiment includes a terminal 270 which is a communication destination of the terminal 240.

Since the configuration other than the above mention is the same as the configuration of the communication system in the first exemplary embodiment, the same code is assigned to the configuration other than the above mention, and related explanation is omitted.

### [Explanation of operation]

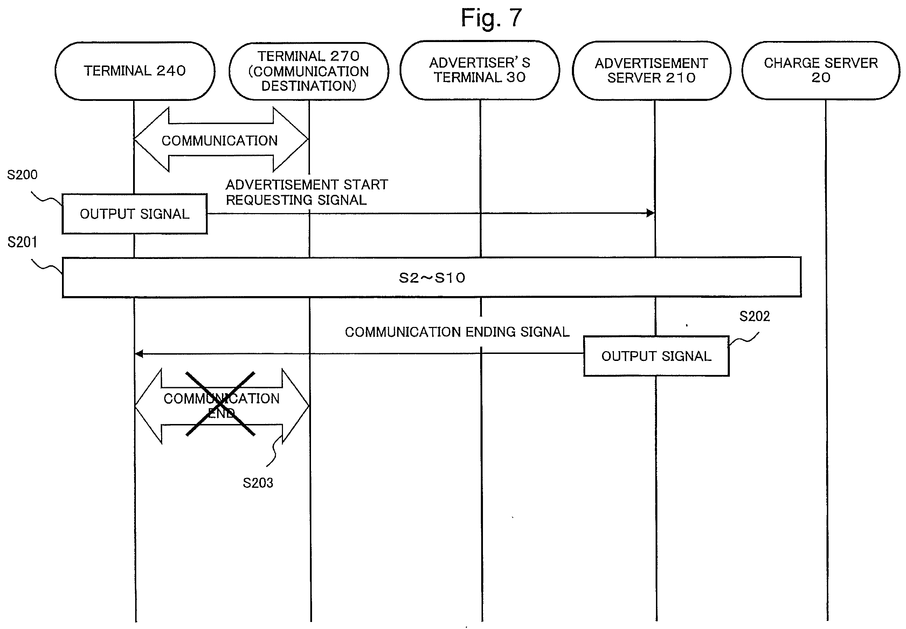

Fig. 7 is a diagram for explaining an operation of the communication system in the second exemplary embodiment of the present invention. With reference to Fig. 7, the operation of the communication system in the present exemplary embodiment will be explained in the following.

Hereinafter, explanation is continued on the assumption that, after a user of the terminal 240 communicates with the terminal 270 which is the communication destination, the user pushes an electric power source button in order to end communication. It is assumed that the terminal 240 has a function to output the above-mentioned advertisement start requesting signal when the user pushes the electric power source button.

### (1) Explanation on operation of the communication system of the present exemplary embodiment

Firstly, when the user of the terminal pushes the electric power source button, the terminal 240 outputs the advertisement start requesting signal to the advertisement server 210 (S200) as shown in Fig. 7.

At timing when the advertisement start requesting signal is inputted into the advertisement server 210, the advertisement server 210, the charge server 20, the advertiser's terminal 30 and the terminal 240 carry out the above-mentioned S2 to S10 (S201).

Next, after S2 to S10 have been carried out, the advertisement server 210 sends a signal (hereinafter, referred to as 'communication ending signal'), which indicates end of communication, to the terminal 240.

Next, when the communication ending signal is inputted from the advertisement server 210, the terminal 240 ends the communication with the terminal 270 which is the communication destination (S203).

The terminal 240 may end the communication according to a general procedure such as the procedure specified by H. 225 of ITU-T. ITU-T is an abbreviation for International Telecommunication Union Telecommunication Standardization Sector.

Since the other operations are the same as one of the first exemplary embodiment, detailed explanation is omitted.

### [Third exemplary embodiment]

Next, a third exemplary embodiment of the present invention will be explained. A communication system of the third exemplary embodiment is a system in which an advertisement server sends an advertisement and an inquiry to a terminal at a time zone (for example, time zone before dawn) when there is a small amount of communication traffic. The terminal stores the advertisement and the inquiry which are sent, and displays the advertisement and the inquiry when carrying out communication (in the daytime or the like). Since the advertisement server sends the advertisement and the inquiry to the terminal at the time zone when there is a small amount of communication traffic, the communication system of the third exemplary embodiment has an effect that generation of congestion has less possibility in comparison with the communication system of the first exemplary embodiment.

### [Explanation on configuration]

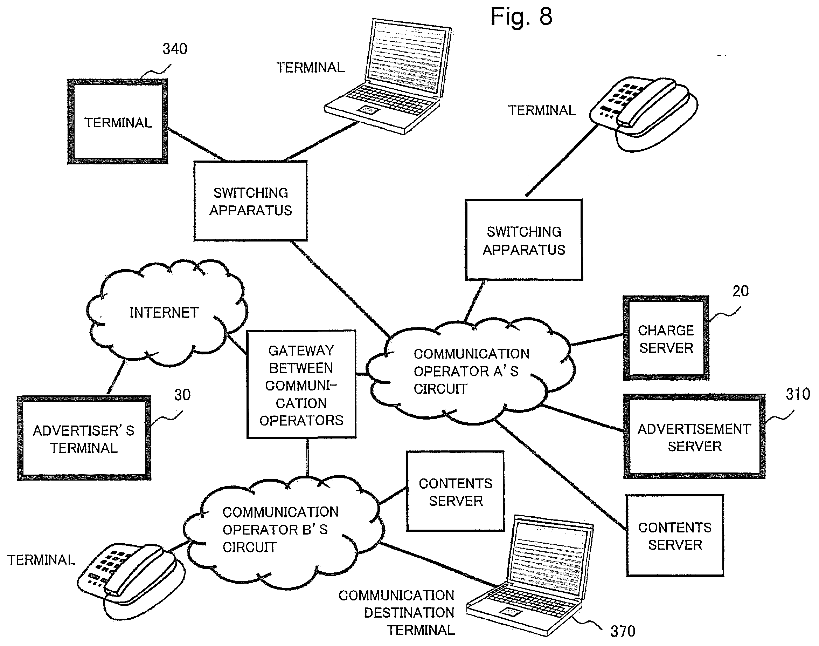

Fig. 8 is a diagram showing an example of a configuration of the communication system in the third exemplary embodiment of the present invention.

As shown in Fig. 8, the communication system of the present exemplary embodiment includes an advertisement server 310 and a terminal 340 in place of the advertisement server 10 and the terminal 40. Moreover, as shown in Fig. 8, the communication system of the present exemplary embodiment includes a terminal 370 as a communication destination of the terminal 340.

Since the configuration other than the above mention is the same as the configuration of the communication system in the first exemplary embodiment, the same code is assigned to the configuration other than the above mention, and related explanation is omitted.

### [Explanation on operation]

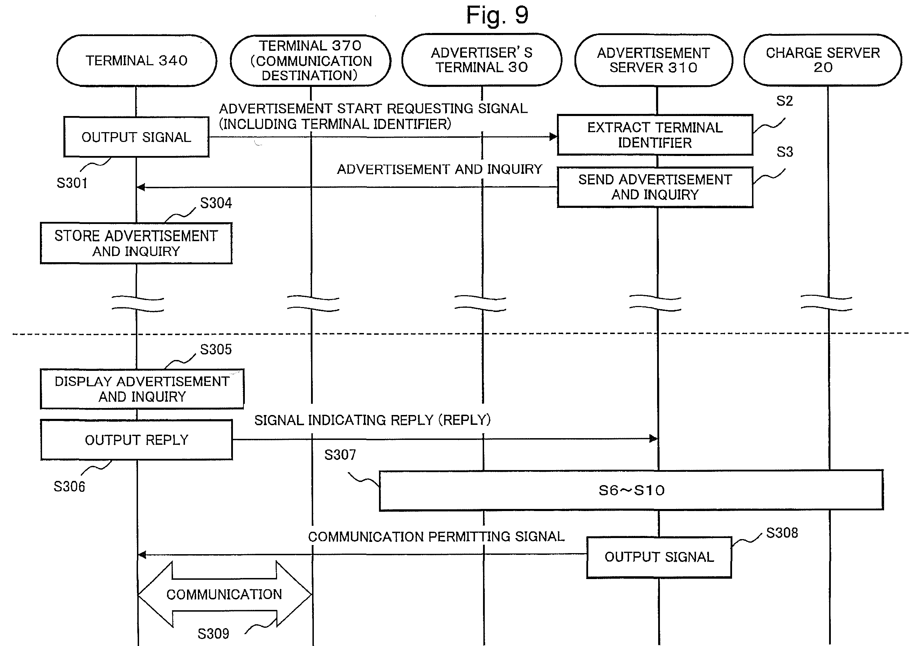

Fig. 9 is a diagram for explaining an operation of the communication system in the third exemplary embodiment of the present invention. With reference to Fig. 9, the operation of the communication system in the present exemplary embodiment will be explained in the following.

### (1) Operation to send the advertisement or the like to the terminal at the time zone when there is a small amount of communication traffic

Firstly, the terminal 340 has a clock function, and sends the advertisement start requesting signal to the advertisement server 310 when a predetermined time comes (S301) as shown in Fig. 9.

The predetermined time is a time (hereinafter, referred to as 'set time') within the time zone (time zone before dawn or the like) when there is a small amount of communication traffic, and is set in advance in the terminal 340 by a manufacturer of the terminal 340. The manufacturer of the terminal 340 may confirm the time within the time zone when there is a small amount of communication traffic by asking a manager of the communication system of the present exemplary embodiment. Here, the terminal 340 and the advertisement server 310 may have a general update function. In this case, the advertisement server 310 sets the above-mentioned set time in the terminal 340 by use of the general update function. The above-mentioned set time is set in advance in the advertisement server 310 by the manager of the communication system of the present exemplary embodiment.

Next, when the advertisement start requesting signal is inputted in the above-mentioned S301, the advertisement server 310 carries out the above-mentioned S2 to S3. That is, the advertisement server 310 stores the terminal identifier, and converts the advertisement or the like into an electric signal, and sends the electric signal to the terminal 340 (S2 to S3).

Next, the terminal 340 extracts the advertisement or the like from the inputted electric signal, and stores the extracted advertisement or the like (S304).

### (2) Another example of operation to send the advertisement or the like to the terminal at the time zone when there is a small amount of communication traffic

Here, the advertisement server 310 may send the advertisement or the like to the terminal 340 when a predetermined time comes. Specifically, when the predetermined time comes after the terminal 340 carries out S1 in place of S301 and the advertisement server 310 carries out S2, the advertisement server 310 may send the set advertisement or the like (converting into the electric signal) to the terminal 340.

### (3) Operation at a time when the user of terminal communicates in the daytime or the like (Operation of Advertisement display or the like)

It is assumed that, after carrying out the above-mentioned S304, in order to communicate with another terminal 370, the user of the terminal 340 inputs a telephone number of the terminal 370 into an input device of the terminal 340, and pushes a communication button.

The terminal 340, whose communication button is pushed, displays the stored advertisement and the stored inquiry on a screen of the terminal 340 (S305).

Next, similarly to the above-mentioned S6, the terminal 340 embeds a reply to the inputted inquiry in a signal indicating reply, and outputs the signal indicating reply to the advertisement server 310.

Specifically, when the reply to the inquiry is inputted into the input device, the terminal 340 embeds data (that is, reply data), which the input device outputs, in the signal indicating reply, and outputs the signal indicating reply to the advertisement server 310.

At timing when the signal indicating reply is inputted into the advertisement server 310, the advertisement server 310, the charge server 20 and the advertiser's terminal 30 carry out the above-mentioned S6 to S10 (S307).

Next, after carrying out S6 to S10, the advertisement server 310 outputs a signal (hereinafter, referred to as communication permitting signal), which indicates permission for communication, to the terminal 340 (S308).

Next, when the communication permitting signal is inputted from the advertisement server 310, the terminal 340 starts communication according to a general procedure such as the procedure specified by H. 225 of ITU-T (S309).

Since the other operations are the same as the operation of the first exemplary embodiment, detailed explanation is omitted.

### [Explanation of effect]

Since the advertisement server sends the advertisement and the inquiry to the terminal at the time zone when there is a small amount of communication traffic, the communication system of the present exemplary embodiment has an effect that generation of congestion in communication has less possibility in comparison with the communication system of the first exemplary embodiment.

### [Fourth exemplary embodiment]

Next, a fourth exemplary embodiment of the present invention will be explained. A communication system of the fourth exemplary embodiment is a system which stores a plurality of advertisements and a plurality of inquiries, and sends the plural advertisements and the plural inquiries, which are stored, to a terminal one by one. A user of the terminal can watch and listen to the plural advertisements. Moreover, when a user of the terminal pushes a predetermined key of the terminal, the communication system of the fourth exemplary embodiment makes the advertisement server stop sending the plural advertisements to the terminal.

### [Explanation on configuration]

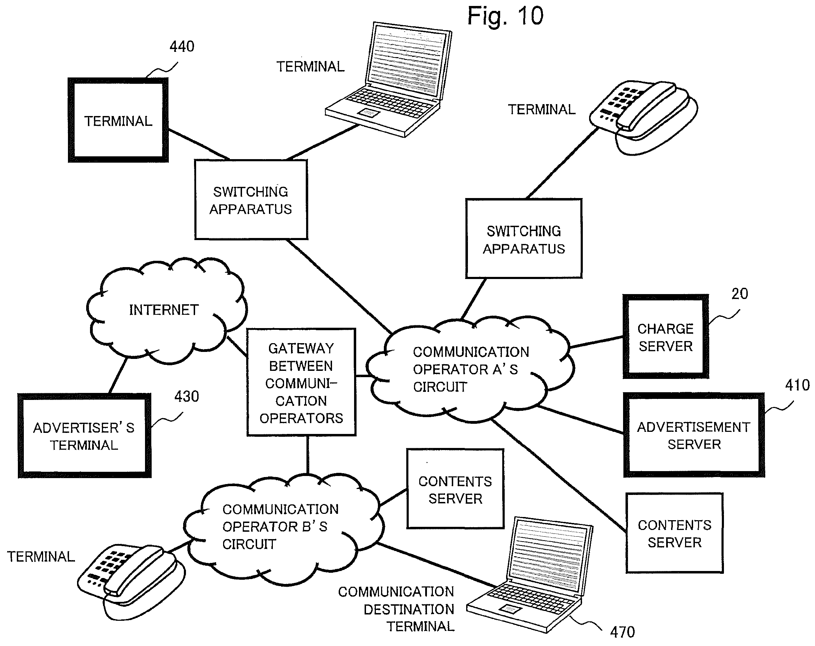

Fig. 10 is a diagram showing an example of a configuration of the communication system in the fourth exemplary embodiment of the present invention.

As shown in Fig. 10, the communication system of the present exemplary embodiment includes an advertisement server 410, an advertiser's terminal 430 and a terminal 440 in place of the advertisement server 10, the advertiser's terminal 30 and the terminal 40. Moreover, as shown in Fig. 10, the communication system of the present exemplary embodiment includes a terminal 470 which is a communication destination of the terminal 440.

Since the configuration other than the above mention is the same as the configuration of the communication system in the first exemplary embodiment, the same code is assigned to the configuration other than the above mention, and related explanation is omitted.

### [Explanation on operation]

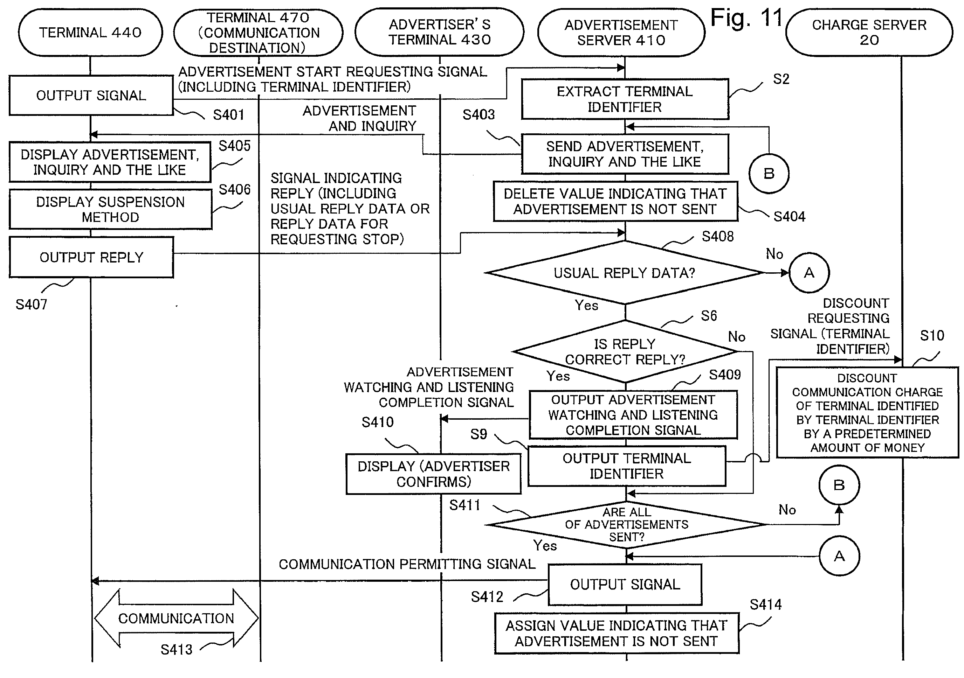

Fig. 11 is a diagram for explaining an operation of the communication system in the fourth exemplary embodiment of the present invention. With reference to Fig. 11, the operation of the communication system in the present exemplary embodiment will be explained in the following.

### (1) Prior setting in the advertisement server 410

A manager of the communication system of the present exemplary embodiment associates the advertisement, the inquiry on the advertisement and a title name of the advertisement (hereinafter, referred to as 'advertisement B or the like'), and sets a plurality of the associations in the advertisement server 410. When the advertisement B or the like is set in the advertisement server 410, the advertisement server 410 associates a value, which indicates that the advertisement is not sent, with the set advertisement B or the like. The above-mentioned value indicating that the advertisement is not sent is set in the advertisement server 410 in advance by the manager of the communication system of the present exemplary embodiment before the advertisement B or the like is set.

### (2) Prior setting in the terminal 440

A manufacturer of the terminal 440 determines that a key, which is considered not to be used for replying to the inquiry, is a stop key, and sets text data, which indicates the stop key, in the terminal 440. Here, on the assumption that the stop key is a # key, explanation is continued.

### (3) Operation of the communication system of the present exemplary embodiment

Hereinafter, in the communication system of the present exemplary embodiment, an operation that the advertisement server 410 sends the plural advertisements B or the like, which are set, to the terminal 440 will be explained. Moreover, an operation that the advertisement server 410 stops sending the plural advertisements B or the like in the case that the stop key is pushed will be explained together.

### (3-1) Operation that the advertisement server 410 sends the advertisements B or the like to the terminal 440

Firstly, it is assumed that, in order to communicate with the other terminal 470, the user of the terminal 440 inputs a telephone number of the terminal 470 into an input device of the terminal 440, and pushes a communication button. At this time, the terminal 440 outputs an advertisement start requesting signal to the advertisement server 410 (S401) as shown in Fig. 11.

Next, when the advertisement start requesting signal is inputted from the terminal 440, similarly to the above-mentioned S2, the advertisement server 410 extracts a terminal identifier of the terminal 440 from the inputted advertisement start requesting signal, and stores the extracted terminal identifier (S2).

Next, the advertisement server 410 extracts any advertisement B or the like, with which a value indicating that the advertisement is not sent is associated, out of the plural advertisements B or the like which are set in the advertisement server 410, and converts the extracted advertisement B or the like into an electric signal, and sends the electric signal to the terminal 440 (S403).

Next, after sending the advertisement B or the like, the advertisement server 410 deletes the value which indicates that the advertisement is not sent and which is associated with the sent advertisement B or the like (S404). The reason for carrying out S404 is to make it possible that the advertisement B or the like, which is not sent, is sent to the terminal 440 when carrying out the above-mentioned S403 next time.

After carrying out the above-mentioned S403, the terminal 440 extracts the advertisement B or the like (that is, the advertisement, the inquiry on the contents of the advertisement and the title name of the advertisement) from the inputted electric signal, and displays the extracted advertisement B or the like on a screen of the terminal 440 (S405).

Furthermore, the terminal 440 displays which key out of keys of the input device is the stop key which stops display of the advertisement (S406).

Specifically, the terminal 440 displays a text data (text data which is set in the above-mentioned operation of '(2) Prior setting in the terminal 440'), which indicates the stop key, on the screen.

For example, if the text data, which indicates the stop key, is data which indicates that 'The stop key stopping display of the advertisement is the # key', the terminal 440 may display that 'The stop key stopping display of the advertisement is the # key' on the screen.

### (3-2) Input by the user of the terminal

While the following is not shown in the drawing, the user of the terminal 440 checks the advertisement and the inquiry, and inputs a reply to the inquiry into the terminal 440 through the input device of the terminal 440. At this time, if the user of the terminal 440 wants to watch and listen to the advertisement no longer, the user of the terminal 440 pushes the stop key (# key), and inputs # into the terminal 440 as the reply.

### (3-3) Operation to inform an advertiser that the user of the terminal watched and listened to the advertisement

Next, similarly to the above-mentioned S5, the terminal 440 embeds the inputted reply in a signal indicating reply, and outputs the signal indicating reply to the advertisement server 410 (S407).

Specifically, when the reply is inputted into the input device, the terminal 440 embeds data (that is, the reply data), which is outputted by the input device, in the signal indicating reply, and outputs the signal indicating reply to the advertisement server 410. Here, a data, which corresponds to #, out of the data outputted by the input device is referred to as 'reply data requesting stop' in the following. Other data (data other than the data corresponding to #) are referred to as 'usual reply data'.

Next, when the signal indicating reply is inputted from the terminal 440, the advertisement server 410 extracts the reply data from the signal indicating reply, and judges whether the extracted reply data is the usual reply data or not (S408).

Specifically, the advertisement server 410 judges whether the extracted reply data is not the reply data requesting stop (that is, data corresponding to #). The above-mentioned reply data requesting stop is set in advance in the advertisement server 410 by the manager of the communication system of the present exemplary embodiment.

Next, in the case that the reply data is not the reply data requesting stop (data corresponding to #) but the usual reply data (in the case of Yes in S408), the advertisement server 410 checks whether the reply is a correct reply by judging whether the reply data is the same as a predetermined data (S6).

Next, in the case that the reply is the correct reply (in the case of Yes in S6), since the user of the terminal 440 has watched and listened to the advertisement, the advertisement server 410 outputs a signal, which indicates that the user of the terminal watched and listened to the advertisement, to the advertiser's terminal 430 (S409).

Here, in the above-mentioned S409, the advertisement server 410 embeds the terminal identifier and the title name of the advertisement, which are extracted in the above-mentioned S2, in the signal (that is, advertisement watching and listening completion signal) which indicates that the user of the terminal has watched and listened to the advertisement signal, and outputs the advertisement watching and listening completion signal. The outputted title name of the advertisement is the title name of the advertisement which is sent in the above-mentioned S403.

Next, when the advertisement watching and listening completion signal is inputted from the advertisement server 10 in S409, the advertiser's terminal 430 extracts the terminal identifier and the title name from the advertisement watching and listening completion signal, and displays the terminal identifier and the title name on a screen of the advertiser's terminal 430 (S410).

By watching the screen of the advertiser's terminal 430, the advertiser knows that the user of the terminal, which is identified by the terminal identifier, watched and listened to the advertisement with the title name.

Next, after outputting the advertisement watching and listening completion signal to the advertiser's terminal 430, similarly to the above-mentioned S9, the advertisement server 410 outputs a signal (that is, discount requesting signal), which requests to discount a communication charge, to the charge server 20 (S9).

### (3-4) Operation in the case of No in S6

In the above-mentioned S6, in the case that the advertisement server 410 judges that the reply data is different from the predetermined data (in the case of No in S6), the advertisement server 410 carries out the following S411.

In the case of carrying out the above-mentioned S9 or in the case of No in the above-mentioned S6, the advertisement server 410 judges whether all of the set advertisements are sent to the terminal 440 (S411).

Specifically, the advertisement server 410 judges whether the value, which indicates that the advertisement is not sent, is deleted from each of the advertisements B or the like which are set in the advertisement server 410.

In the above-mentioned S411, in the case that the advertisement server 410 judges that all of the set advertisements are sent to the terminal 440 (in the case of Yes in S411), the advertisement server 410 outputs a signal for permitting communication to the terminal 440 (S412).

Specifically, in the case that the value, which indicates that the advertisement is not sent, is deleted from each of the advertisements B or the like which are set in the advertisement server 410, the advertisement server 410 outputs the signal for permitting communication to the terminal 440.

### (3-5) Operation in the case of No in S411

On the other hand, in the above-mentioned S411, in the case that not all of the set advertisements are sent to the terminal 440 (in the case of No in S411), the advertisement server 410, whose operation returns to S403, sends the advertisement B or the like, with which the value indicating that the advertisement is not sent is associated, to the terminal 440. The above operation is for sending all of the advertisements to the terminal 440.

### (3-6) Operation in the case of No in S408

Moreover, in the above-mentioned judgment process of S408, in the case that the reply data is the reply data requesting stop, and is not the usual reply data (in the case of No in S408), the advertisement server 410 carries out the above-mentioned S412, that is, the advertisement server 410 outputs the signal for permitting communication to the terminal 440 (S412). By the advertisement server 410 judging as No in S408, processes of S403 to S411 for sending all advertisements to terminal 440 are stopped.

### (3-7) Operation of the terminal 440

Next, when the signal for permitting communication is inputted from the advertisement server 410 in the above-mentioned S412, the terminal 440 starts communication with the terminal 470, for example, according to a general procedure such as the procedure specified by H. 225 of ITU-T (S413).

When outputting the signal for permitting communication to the terminal 440 after the above-mentioned S412, the advertisement server 410 associates the value, which indicates that the advertisement is not sent, with each of the set advertisements B or the like (S414). The reason for carrying out S414 is to make it possible that the above mentioned S403 and the steps after S403 are carried out when the advertisement start requesting signal is inputted again.

### (3-8) Another example of the operation of the terminal 440

Here, the terminal 440 may have a function to output the advertisement start requesting signal to the advertisement server 410 when an electric power source button is pushed by the user of the terminal. In this case, the user of the terminal 440 can watch and listen to the plural advertisements when pushing the electric power source button to end communication.

Since the other operations are the same as the operation of the first exemplary embodiment, detailed explanation on the other operations is omitted.

### [Explanation of effect]

According to the communication system of the present exemplary embodiment, since the advertisement server sends the set plural advertisements to the terminal, the user of the terminal can watch and listen to the plural advertisements.

### [Fifth exemplary embodiment]

Next, a fifth exemplary embodiment of the present invention will be explained. An advertisement server which is included in a communication system of the present exemplary embodiment sends a questionnaire together with an advertisement to a terminal. The questionnaire is in a form of text data which indicates an inquiry on recognition about the advertisement, and a plurality of choices for reply. If a reply to the questionnaire, which is sent by the terminal, corresponds to any one of the plural choices for reply, the advertisement server provides an advertiser with the choice for reply. As a result, the advertiser, who is provided with the choice for reply, can know what kind of recognition on the advertisement a user of the terminal has.

### [Explanation on configuration]

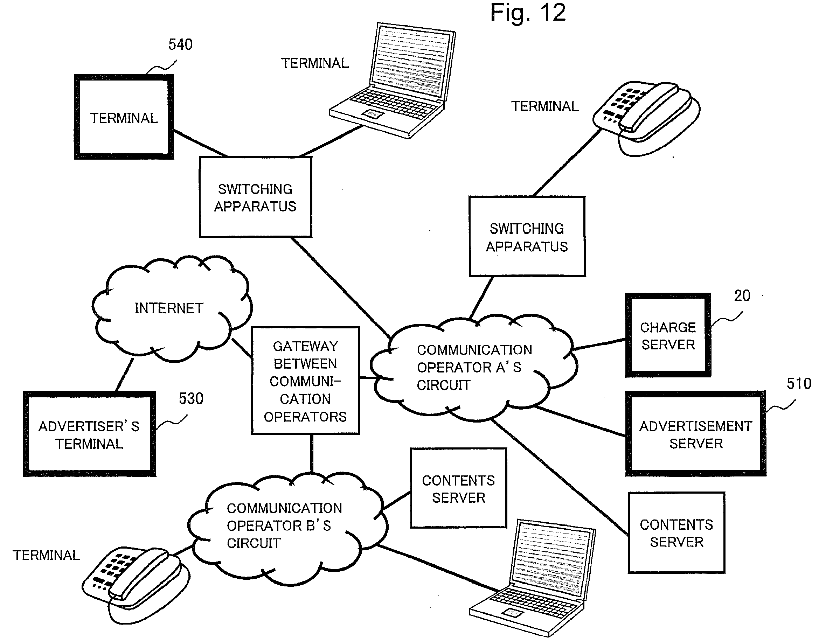

Fig. 12 is a diagram showing an example of a configuration of the communication system in the fifth exemplary embodiment of the present invention.

As shown in Fig. 12, the communication system of the present exemplary embodiment includes an advertisement server 510, an advertiser's terminal 530 and a terminal 540 in place of the advertisement server 10, the advertiser's terminal 30 and the terminal 40.

Since the configuration other than the above mention is the same as the configuration of the communication system in the first exemplary embodiment, the same code is assigned to the configuration other than the above mention, and related explanation is omitted.

### [Explanation on operation]

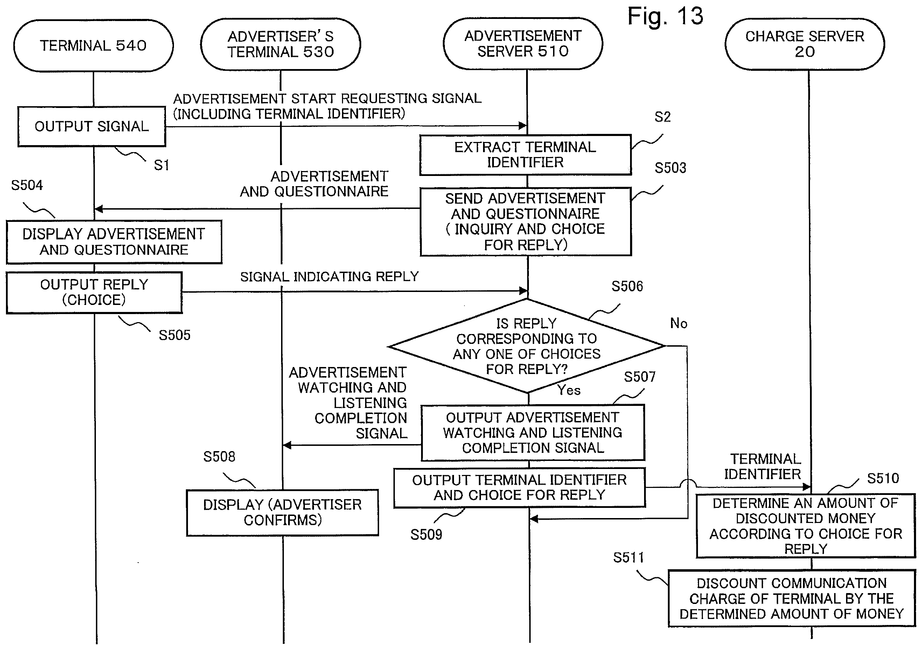

Fig. 13 is a diagram for explaining an operation of the communication system in the fifth exemplary embodiment of the present invention. With reference to Fig. 13, the operation of the communication system in the present exemplary embodiment will be explained in the following.

### (1) Prior setting in the advertisement server 510

The advertisement and the questionnaire are set in the advertisement server 510 by a manager of the communication system of the present exemplary embodiment. When the advertisement and the questionnaire are set, the advertisement server 510 associates a value, which indicates that the advertisement is not sent, with the advertisement and the questionnaire which are set. The above-mentioned value, which indicates that the advertisement is not sent, is set in the advertisement server 510 by the manager of the communication system of the present exemplary embodiment before the advertisement and the questionnaire are set.

Moreover, the above-mentioned questionnaire is in a form of text data which indicates the inquiry on recognition about the advertisement, and a plurality of choices for reply. An example of the questionnaire is shown in the following.

"What kind of impression do you have from this advertisement? 1. novel 2. healed 3. friendly 4. no impression Please give us your reply by pushing a corresponding number key."

### (2) Operation of the communication system of the present exemplary embodiment

The operation of the communication system of the present exemplary embodiment will be explained in detail in the following.

### (2-1) Display of the advertisement and the questionnaire

Firstly, after carrying out the above-mentioned S1 and S2, the advertisement server 510 converts the advertisement and the questionnaire, which are set, into an electric signal and sends the electric signal to the terminal 540 (S503).

Next, the terminal 540 extracts the advertisement and the questionnaire from the inputted electric signal, and displays the advertisement and the questionnaire on a screen of the terminal 540 (S504).

For example, the terminal 540 may display the following on the screen of the terminal 540. "What kind of impression do you have from this advertisement? 1. novel 2. healed 3. friendly 4. no impression Please give us your reply by pushing a corresponding number key."

### (2-2) Input by user of the terminal

Next, while the following is not shown in the drawing, a user of the terminal watches and listens to the advertisement and the questionnaire, and inputs the reply to the questionnaire into the terminal 540 through an input device of the terminal 540. Here, the user of the terminal 540 inputs any one of the above-mentioned choices for reply as the reply.

### (2-3) Informing the advertiser of a questionnaire result

Next, the terminal 540 embeds the inputted reply in a signal indicating reply, and outputs the signal indicating reply to the advertisement server 510 (S505).

Specifically, when the reply is inputted to the input device, the terminal 540 embeds data (that is, reply data), which is outputted by the input device, in the signal indicating reply, and outputs the signal indicating reply to the advertisement server 510.

Next, when the signal indicating reply is inputted from the terminal 540, the advertisement server 510 extracts the reply (reply data) from the signal, and judges whether the extracted reply corresponds to any one of the above mentioned choices for reply (S506).

Specifically, the advertisement server 510 extracts the reply data from the inputted signal indicating reply, and judges whether the extracted reply data is the same as one out of the predetermined data. The predetermined data is a data which corresponds to the above-mentioned choice for reply. By the manager of the communication system of the present exemplary embodiment, the predetermined data is set in advance in the advertisement server 510 for each of the choices for reply.

Next, in the case that the reply corresponds to any one of the choices for reply (in the case of Yes in S506), the advertisement server 510 embeds the corresponding choice for reply, and the terminal identifier extracted in S2 in an advertisement watching and listening completion signal, and outputs the advertisement watching and listening completion signal to the advertiser's terminal 530 (S507).

Specifically, in the case that the extracted reply data is the same as one out of the predetermined data, the advertisement server 510 embeds the corresponding predetermined data, and the terminal identifier extracted in S2 in the advertisement watching and listening completion signal, and outputs the advertisement watching and listening completion signal to the advertiser's terminal 530.

Next, when the advertisement watching and listening completion signal is inputted, the advertiser's terminal 530 extracts the predetermined data and the terminal identifier from the signal, and displays the predetermined data and the terminal identifier on a screen of the advertiser's terminal 530 (S508).

By watching the predetermined data which is displayed on the advertiser's terminal 530, that is, by watching the choice for reply, the advertiser can know what kind of recognition above the advertisement the user of the terminal has.

### (2-4) Discount of a communication charge

Next, as shown in the following S509 to S511, the communication system of the present exemplary embodiment determines an amount of discounted money for a communication charge of the terminal 40 according to contents of the reply to the questionnaire. The communication system of the present exemplary embodiment discounts the communication charge of the terminal 40 by the determined amount of money.

Firstly, when the advertisement watching and listening completion signal is outputted in the above-mentioned S507, the advertiser's terminal 530 embeds the corresponding predetermined data (that is, choice for reply) in S507, and the terminal identifier extracted in S2 in a discount requesting signal, and outputs the discount requesting signal to the charge server 20 (S509).

Next, when the discount requesting signal is inputted, the charge server 20 extracts the terminal identifier and the choice for reply from the discount requesting signal, and determines an amount of money, which corresponds to the choice for reply, with reference to a discount table (S510).

The discount table, in which the choice for reply and an amount of money to be discounted according to the choice for reply are associated each other, is set in the advertiser's terminal 530 by the manager of the communication system of the present exemplary embodiment.

Next, the charge server 20 discounts the communication charge of the terminal 40, which is indicated by the terminal identifier extracted in S510, by the amount of money which is determined in S510 (S511).

### (2-5) Regarding number of the terminals

While the following is not shown in the drawing, the communication system of the present exemplary embodiment may include more than 2 terminals. The number of the terminals is not limited to one. In this case, every time when the advertisement server 510 receives the signal indicating reply from each terminal, the advertisement server 510 carries out the above-mentioned S506 to S507, and sends the predetermined data (that is, choice for reply) to the terminal of the advertiser.

### [Explanation on effect]

According to the communication system of the present exemplary embodiment, it is possible to provide the advertiser with information indicating what kind of recognition about the advertisement the user of the terminal has. The reason is that the advertisement server of the communication system of the present exemplary embodiment sends the questionnaire, which includes the inquiry on recognition about the advertisement, and the plural choices for reply, to the terminal, and if the reply to the questionnaire, which is sent by the terminal, is any one of the plural choices for reply, the advertisement server outputs the reply to the advertiser's terminal.

### [Sixth exemplary embodiment]

Next, a sixth exemplary embodiment of the present invention will be explained.

### [Explanation on configuration]

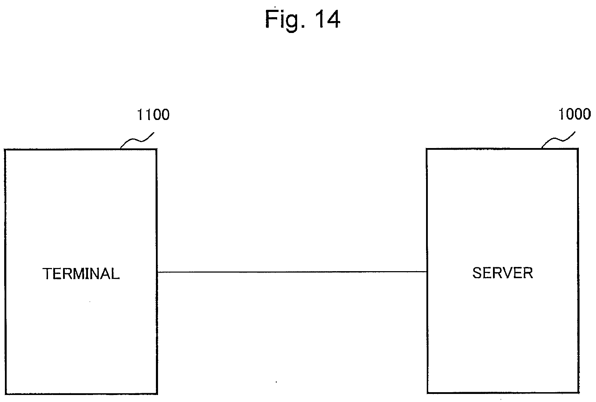

Fig. 14 is a diagram showing an example of a configuration of a communication system in the sixth exemplary embodiment of the present invention.

As shown in Fig. 14, the communication system of the present exemplary embodiment includes a server 1000 and a terminal 1100. The server 1000 is connected with the terminal 1100.

The server 1000 is a server which sends predetermined first information to the terminal 1100, and sends also second information, which prompts the input of a matter related to the first information, at a time when sending the predetermined first information. If a response to the second information, which is sent by the terminal 1000, corresponds to a predetermined response, the server 1000 sends a first predetermined signal.

The terminal 1100 displays the received first signal and the received second signal on a screen of the terminal 1100. Afterward, the terminal 1100 outputs the inputted data, as the response to the second information.

### [Explanation on operation]

When sending the predetermined first information, the server 1000 sends also the second information which prompts the input of the matter related to the first information.

The above-mentioned first information may be an advertisement, for example. The second information may be, for example, a request to prompt the input of the matter related to the first information (advertisement) like 'Please input an article shown on the upper-right of an advertisement shown on a screen of your terminal' or the like. Or, the second information may be an inquiry which prompts the input of the matter related to the first information (advertisement) like 'What is an article shown in this advertisement' or the like.

Next, the terminal 1100 displays the first information and the second information, which are received from the server 1000, on the screen of the terminal 1100.

Next, a user of the terminal 1100 watches and listens to the first information and the second information, and inputs a matter, which is related to the first information, into an input device of the terminal 1100 according to the second information.

The above-mentioned input device is a general input device of the terminal such as a microphone having a voice recognition function, a touch panel, a key board, a terminal key or the like.

Next, when the matter related to the first information is inputted to the input device, the terminal 1100 outputs data, which the input device outputs, to the server 1000 as the response to the second information.

If the response to the second information, which is sent by the terminal 1100, corresponds to the predetermined response, the server 1000 outputs the first predetermined signal.

The predetermined response is set in the server 1000 by a manager of the communication system of the present exemplary embodiment. The manager of the communication system of the present exemplary embodiment sets the data, which the input device of the terminal 1100 outputs when the correct matter is inputted into the input device according to the second information, in the server 1000 in advance as the predetermined response.

### [Explanation on effect]

According to the communication system of the present exemplary embodiment, it is possible to inform a user of the communication system of the present exemplary embodiment that a user of the terminal actually watched and listened to the advertisement.

The reason is that the advertisement server of the present communication system sends the second information, which prompts the input of the matter related to the first information, to the terminal, and judges that the user of the terminal watched and listened to the advertisement if the response to the second information, which is sent by the terminal, is the correct response, and then outputs the predetermined signal.

Since the user of the communication system of the present exemplary embodiment knows that the user of the mobile terminal actually watched and listened to the advertisement, the user of the communication system can thoroughly confirm the effect of the advertisement.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2013-160176, filed on August 1, 2013, the disclosure of which is incorporated herein in its entirety by reference.

Furthermore, the whole or part of the exemplary embodiments disclosed above can be described as, but not limited to, the following supplementary notes.

### (Supplementary Note 1)

A server, sending predetermined first information to a terminal, wherein:
when sending the first information, the server sends also second information which prompts the input of a matter related to the first information; and
the server outputs a first predetermined signal if a response to the second information, which is sent by the terminal, corresponds to a predetermined response.

### (Supplementary Note 2)

The server according to Supplementary Note 1, wherein the first predetermined signal includes a terminal identifier which corresponds to the terminal.

### (Supplementary Note 3)

The server according to any one of Supplementary Notes 1 to 2, wherein
when a predetermined time comes, the server sends the first information and the second information.

### (Supplementary Note 4)

The server according to any one of Supplementary Notes 1 to 3, wherein:
the second information is an inquiry; and
if a reply to the inquiry, which is sent by the terminal, corresponds to a predetermined reply, the server outputs the first predetermined signal.

### (Supplementary Note 5)

The server according to any one of Supplementary Notes 1 to 3, wherein:
the second information is a questionnaire which includes an inquiry and at least one choices for reply; and
if a reply to the questionnaire, which is sent by the terminal, corresponds to any one of the choices for reply, the server outputs the corresponding choice for reply.

### (Supplementary Note 6)

A communication system comprising a server and a terminal, wherein:
the server is the server which is described in any one of Supplementary Notes 1 to 5; and
the terminal is a terminal which displays the received first information and the received second information on a screen of the terminal, and then outputs the inputted data as the response to the second information.

### (Supplementary Note 7)

The communication system according to Supplementary Note 6, wherein
the terminal displays the received first information and the received second information at predetermined timing.

### (Supplementary Note 8)

The communication system according to any one of Supplementary Notes 6 to 7, wherein:
when a predetermined time comes, the terminal outputs a request signal, which requests the first information, to the server; and
when the request signal is inputted, the server sends the first information and the second information.

### (Supplementary Note 9)

An information sending method for sending predetermined first information to a terminal, comprising:
sending also second information, which prompts the input of a matter related to the first information, at a time when sending the first information to the terminal; and
outputting a first predetermined signal if a response to the second information, which is sent by the terminal, corresponds to a predetermined response.

### (Supplementary Note 10)

The information sending method according to Supplementary Note 9, wherein
the first information and the second information are sent when a predetermined time comes.

### (Supplementary Note 11)

The server according to Supplementary Notes 1 to 5, wherein
in the case that the server sends not all pieces of the first information held by the server, and not all pieces of the second information held by the server to the terminal, the server sends the piece of the first information and the piece of the second information, which are not sent, to the terminal.

### (Supplementary Note 12)

The server according to any one of Supplementary Notes 1 to 3, and 11, wherein:
the second information is a request for input; and
if a response to the request for input, which is sent by the terminal, corresponds to a predetermined response, the server outputs the first predetermined signal.

### (Supplementary Note 13)

The server according to any one of Supplementary Notes 1 to 5, and 11 to 12, wherein the first information is an advertisement.

### (Supplementary Note 14)

The server according to any one of Supplementary Notes 1 to 5, and 11 to 13, wherein
if a response to the second information corresponds to a predetermined response, the server outputs a second predetermined signal which includes a terminal identifier corresponding to the terminal.

### (Supplementary Note 15)

The communication system according to any one of Supplementary Notes 6 to 7, wherein:
when a predetermined key of the terminal is pushed, the terminal outputs a request signal, which requests the first information, to the server; and
when the request signal is inputted, the server sends the first information and the second information.

### (Supplementary Note 16)

The communication system according to any one of Supplementary Notes 6 to 8, and 15, wherein:
the communication system comprises a charge server which manages a communication charge of the terminal; and
when the second predetermined signal is inputted from the server which is described in Supplementary Note 14, the charge server discounts the communication charge of the terminal, which corresponds to the terminal identifier extracted from the second predetermined signal, by a predetermined amount of money.

### (Supplementary Note 17)

The communication system according to Supplementary Note 16, wherein
the charge server discounts the communication charge of the terminal, which corresponds to the terminal identifier, by a predetermined amount of money corresponding to the predetermined response.

### (Supplementary Note 18)

The communication system according to any one of Supplementary Notes 7 to 8, and 15 to 17, wherein
the predetermined timing is timing when the terminal starts communication or ends communication.

### (Supplementary Note 19)

The communication system according to any one of Supplementary Notes 6 to 8, and 15 to 18, further comprising:
a display terminal which, when the first predetermined signal is inputted from the server which is described in any one of Supplementary Notes 2 to 5 or any one of Supplementary Notes 11 to 14, displays the terminal identifier which is included in the first predetermined signal.

### (Supplementary Note 20)

The communication system according to any one of Supplementary Notes 15 to 19, wherein
the predetermined key is an electric power source button or a communication button.

### (Supplementary Note 21)

The information sending method according to any one of Supplementary Notes 9 to 10, wherein
the first information is an advertisement.

### [Reference signs List]

- 10, 210, 310, 410 and 510: Advertisement server
- 20: Charge server
- 30, 430 and 530: Advertiser's terminal
- 40, 240, 270, 340, 370, 440, 470, 540 and 1100: Terminal
- 50: Switching apparatus
- 60: Base station
- 1000: Server

## Claims

1. A server, sending predetermined first information to a terminal, wherein:
when sending the first information, the server sends also second information which prompts the input of a matter related to the first information; and
the server outputs a first predetermined signal if a response to the second information, which is sent by the terminal, corresponds to a predetermined response.

2. The server according to Claim 1, wherein the first predetermined signal includes a terminal identifier which corresponds to the terminal.

3. The server according to any one of Claims 1 to 2, wherein
when a predetermined time comes, the server sends the first information and the second information.

4. The server according to any one of Claims 1 to 3, wherein:
the second information is an inquiry; and
if a reply to the inquiry, which is sent by the terminal, corresponds to a predetermined reply, the server outputs the first predetermined signal.

5. The server according to any one of Claims 1 to 3, wherein:
the second information is a questionnaire which includes an inquiry and at least one choices for reply; and
if a reply to the questionnaire, which is sent by the terminal, corresponds to any one of the choices for reply, the server outputs the corresponding choice for reply.

6. A communication system comprising a server and a terminal, wherein:
the server is the server which is described in any one of Claims 1 to 5; and
the terminal is a terminal which displays the received first information and the received second information on a screen of the terminal, and then outputs the inputted data as the response to the second information.

7. The communication system according to Claim 6, wherein
the terminal displays the received first information and the received second information at predetermined timing.

8. The communication system according to any one of Claims 6 to 7, wherein:
when a predetermined time comes, the terminal outputs a request signal, which requests the first information, to the server; and
when the request signal is inputted, the server sends the first information and the second information.

9. An information sending method for sending predetermined first information to a terminal, comprising:
sending also second information, which prompts the input of a matter related to the first information, at a time when sending the first information to the terminal; and
outputting a first predetermined signal if a response to the second information, which is sent by the terminal, corresponds to a predetermined response.

10. The information sending method according to Claim 9, wherein
the first information and the second information are sent when a predetermined time comes.

11. The server according to Claims 1 to 5, wherein
in the case that the server sends not all pieces of the first information held by the server, and not all pieces of the second information held by the server to the terminal, the server sends the piece of the first information and the piece of the second information, which are not sent, to the terminal.

12. The server according to any one of Claims 1 to 3, and 11, wherein:
the second information is a request for input; and
if a response to the request for input, which is sent by the terminal, corresponds to a predetermined response, the server outputs the first predetermined signal.

13. The server according to any one of Claims 1 to 5, and 11 to 12, wherein the first information is an advertisement.

14. The server according to any one of Claims 1 to 5, and 11 to 13, wherein
if a response to the second information corresponds to a predetermined response, the server outputs a second predetermined signal which includes a terminal identifier corresponding to the terminal.

15. The communication system according to any one of Claims 6 to 7, wherein:
when a predetermined key of the terminal is pushed, the terminal outputs a request signal, which requests the first information, to the server; and
when the request signal is inputted, the server sends the first information and the second information.

16. The communication system according to any one of Claims 6 to 8, and 15, wherein:
the communication system comprises a charge server which manages a communication charge of the terminal; and
when the second predetermined signal is inputted from the server which is described in Claim 14, the charge server discounts the communication charge of the terminal, which corresponds to the terminal identifier extracted from the second predetermined signal, by a predetermined amount of money.

17. The communication system according to Claim 16, wherein
the charge server discounts the communication charge of the terminal, which corresponds to the terminal identifier, by a predetermined amount of money corresponding to the predetermined response.

18. The communication system according to any one of Claims 7 to 8, and 15 to 17, wherein
the predetermined timing is timing when the terminal starts communication or ends communication.

19. The communication system according to any one of Claims 6 to 8, and 15 to 18, further comprising:
a display terminal which, when the first predetermined signal is inputted from the server which is described in any one of Claims 2 to 5 or any one of Claims 11 to 14, displays the terminal identifier which is included in the first predetermined signal.

20. The communication system according to any one of Claims 15 to 19, wherein
the predetermined key is an electric power source button or a communication button.

21. The information sending method according to any one of Claims 9 to 10, wherein
the first information is an advertisement.
